# EUROPEAN PATENT APPLICATION

(11) **EP 4 447 462 A2**
(43) Date of publication of application: **16.10.2024**
(21) Application number: 24197052.4
(22) Date of filing: 26.11.2019
(51) Int. Cl.: H04N 21/262

(54) **SELECTIVELY INSERTING CONTENT IN STREAMED OR BROADCAST MEDIA CONTENT**

(30) Priority: 26.11.2018 GB 201819198
(62) Divisional of application: 19211658.0
(71) Applicant: Youview TV Ltd, London E1 8FA (GB)
(72) Inventor: GOLD, Martin Peter, Winchester, SO21 2BP (GB); RICHARDSON, John Robert, Farnham, GU10 3RE (GB)
(74) Representative: Reddie & Grose LLP

(57) **Abstract**

A method and apparatus are provided for selectively inserting replacement media content, such as advertisements, in scheduled media content for each of a plurality of client devices. The media content to be inserted is selected and downloaded to the respective client device and then a playback time for the downloaded media content is signalled to the client devices which can then play it at the playback time. Content is selected by one or more content selection servers connected to the plurality of client devices and a time provided in a previous response from a content selection server is used for each client device to request the media content selection.

## Description

### FIELD OF THE INVENTION

This invention relates to a method and system for selectively inserting or replacing content in streamed or broadcast media content, such as maybe used with streamed media channels typically received via a set top box by a plurality of users.

### BACKGROUND TO THE INVENTION

Known streamed video services often include facilities for Dynamic Advert Insertions (DAI) for linear streamed channels, e.g., channels equivalent to conventional broadcast television channels. DAI enables adverts to be targeted at specific viewers in dependence on, for example, their viewing habits, previous adverts viewed, or preferences selected by a viewer.

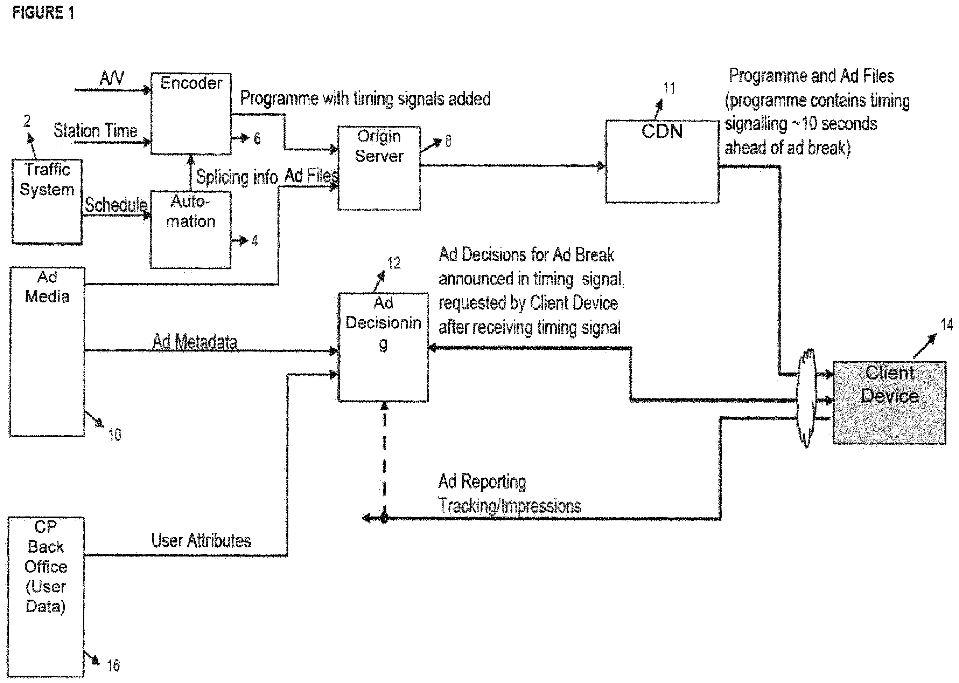

Figure 1 shows a prior art system for DAI insertion of adverts into a video stream. In this, a traffic system unit (2) provides schedule information to an automation unit which provides splicing information relating to the timing of programmes and adverts. This automation unit (4) provides this information to an encoder (6) which receives the audio video information and timing information. This information, comprising programme information and timing signals is then provided to an origin server (8) along with advert information from an ad media unit (10). The output of the origin server is provided to a content delivery network (CDN) (11) for streaming to client devices. The splicing information relating to the programmes and adverts is used to insert adverts at various advert (ad) breaks in the programme schedule.

The ad media unit (10) also provides metadata to an ad decisioning unit (12). This also receives user data from a Content Provider (CP) back office unit (14) comprising user attributes which are used to decide which adverts should be selectively provided to which users.

The CDN (11) distributes a timing signal, typically about ten seconds ahead of an ad break indicating that a targeted advert may be sent. A client device (14) receives this and sends a request back to the ad decisioning unit (12) which determines that a particular advert is to be shown to a particular user. That advert is then available at the CDN (11), delivered initially from the origin server (8), for the client device to retrieve and show at the next ad break.

Advert reporting and tracking data is also sent back from the client device for assistance in determining when and how often the ad has been shown to a particular user.

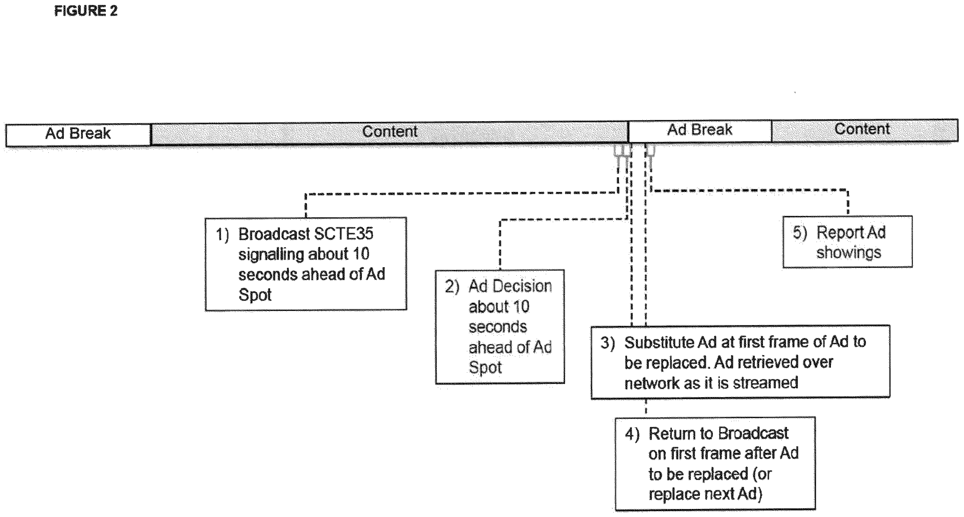

Figure 2 shows the timing sequence of the system of Figure 1. As can be seen, a video stream contains content blocks and advert break blocks. The fact that an advert break is imminent is broadcast as a signal about ten seconds ahead of that ad break. Between broadcasting the signal and the ad break, a request from the client device is sent back to the ad decisioning unit. This enables a substitute ad to be selected and retrieved by the client device to be started in the ad break block in place of an ad provided by the channel provider in the linear streamed channel. After the advert has completed, the broadcast returns to the linear content provided by the broadcaster and a report is sent back from the client device indicating that the ad has been shown. As will be appreciated, when a selected ad is triggered by the ad decisioning unit, in the ten seconds before the ad spot, the ad needs to be provided to the client device so that it is ready to be played in the ad break. Typically the start of the ad will be downloaded before the ad break starts, with the remaining portion downloaded during playback on a set top box. This enables it to be played when the ad break commences.

In a system with a small number of client devices requesting an ad decision, these timings can work well. However, if there are many client devices then the rate at which ad decisions are required for all the users becomes unmanageable as the amount of time required for ad decisions increases. Timings are related to the precise time of the start of the ad breaks which are generated by the channel's playout system meaning that it is not practical to make the ad decision more than about 30 seconds before the ad break. With millions of clients, this is insufficient time for all the decisions and downloads to be performed.

### Summary of the Invention

Preferred embodiments of the present invention provide a system in which adverts which a broadcaster may wish to show selectively to certain users are downloaded, in advance of any ad timing signalling provided to each client device and can then be selectively played from storage on a user's client device in response to ad signalling of the type shown in Figures 1 and 2.

### BRIEF DESCRIPTION OF THE DRAWINGS

Preferred embodiments of the invention will now be described in detail by way of example with reference to the accompanying drawings in which:
Figure 1 shows a schematic diagram of a prior art system for selectively showing adverts to users;
Figure 2 shows a timing diagram for the signalling relating to the broadcasting of adverts to users in the system of Figure 1;
Figure 3 is a block diagram of a preferred embodiment of the invention showing modifications which are made to the system of Figure 1 in order to provide the embodiment of the invention;
Figure 4 shows a timing diagram for signalling relating to the system at Figure 3 and
Figure 5 shows further details of the timing signals in Figure 4.

### DETAILED DESCRIPTION OF PREFERRED EMBODIMENTS

Preferred embodiments of the invention are now described in detail. Preferred embodiments relate to an overall system for the invention, the method by which that system operates, a client device such as a set top box or smart TV for use in the system, and a broadcast unit for sending streamed video and adverts to a plurality of user devices. Each of these concepts embodies the invention.

The embodiments described are by way of example only and those skilled in the art will understand the variations and equivalents which can be implemented. Where features have been shown as hardware they are able to be implemented as software and where features are described as being implemented in software, they are able to be implemented in hardware without departing from the scope of the invention.

The prior art system and timings relating thereto have been described above in relation to Figures 1 and 2.

In the system as shown in Figure 1, broadcasters using such a system have a scheduling or traffic system which prepares a schedule that becomes more accurate closer to broadcast time. This is because there can be unexpected events or overruns in live programmes which cause the timings to vary. For example, an approximate schedule is available several weeks ahead for published programme guides. More detailed information on programming and programme durations becomes available closer to the broadcast time.

It is not unusual for final broadcast timing only to become known very close to broadcast time. This is particularly the case with live content, such as news programmes. It can also be caused by late arriving programme content where the exact duration to frame is only known once the content is available. This can relate to programme content provided by third parties. Newsflashes between programmes with urgent news can also alter timings. Additionally, equipment malfunctions at the broadcast end can cause changes to timings.

The signalling required for dynamic insertion in the system of Figure 1 needs to be frame accurate and so the automation system which defines exact playout timing only triggers this about ten seconds ahead of broadcast.

The inventors have appreciated that the problems which arise when trying to send different adverts to different clients at the same time in this second window shown in Figure 2 can be avoided. This is possible because they have appreciated that most client devices now include the facility to store video and audio data for subsequent broadcast. This is because most client devices have the capacity to record on, hard disc or solid state device programmes which have been recorded for later playback. Alternatively ads can be stored in storage not specifically intended for programme recording. Some client devices have enough unused RAM to be used for this purpose which could be allocated to ad storage during linear channel viewing. Others have sufficient flash storage to enable some to be used for ad storage. Such memory may be required for other purposes at other times, such as running other applications.

As a result, embodiments of the invention enable selected adverts which may be triggered for viewing by a user to be downloaded to a user's client device significantly in advance of an ad break so that when the triggering sequence for DAI commences, it is not necessary for the ad to be downloaded in the ten second window after the triggering signal. The ad is already on a user's device and the triggering simply triggers playback from that user's device.

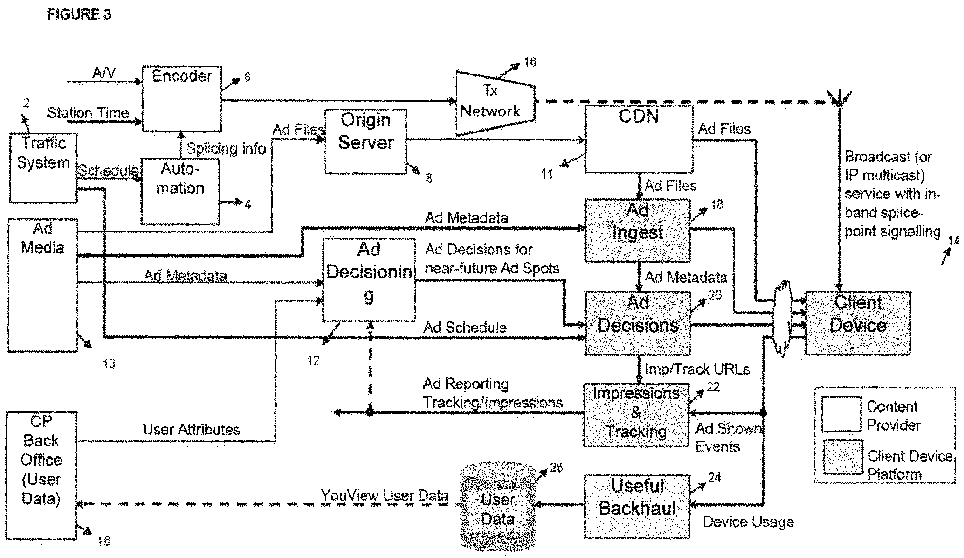

Figure 3 shows the modifications to the system of Figure 1 which are required to implement an embodiment of the invention. Figure 3 includes all the units of Figure 1 but additionally includes other units. These enable the ad selections to be made for a large number of client devices and for the selected ads to be downloaded prior to the broadcast timing signal which triggers the ad playback.

All the units at Figure 1 are present in Figure 3. In addition, the encoder is shown sending audio video signals to a transmission network (16). Thus, the invention is shown being able to use DAI in broadcast video signals. This is in addition to the capability to include ads in streamed video signals.

In Figure 1, the CDN (11) is shown providing both programme and ad files to client devices. In Figure 3 the programme signals go via the transmission network. Figure 3 could of course be modified so that the programmes go via the CDN (11) as in Figure 1.

In Figure 3, the ad files are provided to a client device via the CDN (11). The ad media unit (10) provides metadata for ads that will be used for DAI in advance of their usage. This metadata includes the location of the Ad file on the CDN (11). The ad ingest unit (18) processes the Ad file which it retrieves from the CDN to generate further metadata that is made available to the ad decision unit (20). This further metadata is included in the ad decision information from the ad decision unit (20) to the client device, and assists the client device with reliable downloading and playback of the ad file.

More specifically the ad ingest unit (18) processes advert files which are identified to it over the ad metadata link from the ad media unit (10). The processing which the ad ingest unit (18) performs generates and provides the following:
To the client device: An ad index file which assists with skip, fast forward, and rewind (initiated by the user) during playback of the advert.

To the Ad decisions server:
An identifier that is used for the ad file in all interfaces with the client device;
Uniform Resource Locator (URL) of index file
The precise duration (play time) of the ad file
The size of the ad file and a file hash for integrity checking
The index file size and a file hash for integrity checking

These are all included in the response to the client device to an ad decision request. The ad decision server retrieves the data when it gets an ad decision from the ad decisioning unit.

The timing is such that when an ad decisions response contains a particular advert, the client device checks if it already has the advert in its cache. If not, it retrieves the ad file from the CDN (11) and the ad index file from the ad ingest unit (18).

An ad decisions unit (20) is provided at the content provider and this also receives the ad metadata from the ad ingest unit (18). Alternatively the ad decisions unit could be provided elsewhere in the system, or in the cloud. The ad decisions unit (20) receives ad schedule data from the traffic system (2). It uses the ad schedule to calculate a time window during which it should request ad decisions for near future ad spots from the ad decisioning unit (12). The ad decision responses for the spots in an ad break are combined with ad metadata from the ad ingest unit (18) and supplied to the client device (14).

The ad decisions unit (20) in one embodiment is not able to determine whether a client device has previously downloaded an advert. Other embodiments can be configured to track this information. The timing of the ad decision assumes that the client may need to download the advert each time in order to have it ready for playback. This embodiment does not attempt to track for each specific client device which adverts are already downloaded to a client device. In an alternative embodiment this information could be tracked, such as by storing a record of adverts downloaded by each client device, and updating the record when adverts are deleted by the client device. In another alternative embodiment, the advert storage could be managed externally so that the client device receives instructions on which adverts to download and delete.

The ad decisions unit (20) collates one or more ad decisions for the ad spots in an ad break and provides these in a response to a request from the client device for ad decisions that will be needed in the near future (particularly the next ad break, but this may include one or more future ad breaks). A client device reacts to the ad decision results by checking for each specified ad if it has the ad file (and the associated index file) already stored in its cache. If not it starts downloading the ad file. If the ad file and its associated index file is available from its cache or other local storage, having been successfully downloaded, then when the ad spot is signalled in the broadcast stream, it proceeds to play the substitute ad at the time indicated in the signal.

An impressions and tracking unit (22) receives information about adverts which have been shown and generates tracking and impression data according to URLs provided in the data from the Ad Decisioning unit (20). A usage backhaul unit (24) provides information on a user's viewing habits which can be stored in a user data store (26) and used by the content provider back office processing unit (16) to construct user attributes that provide input to decisions on which ads to show via DAI. This information is provided to the ad decisioning unit (12) as in Figure 1.

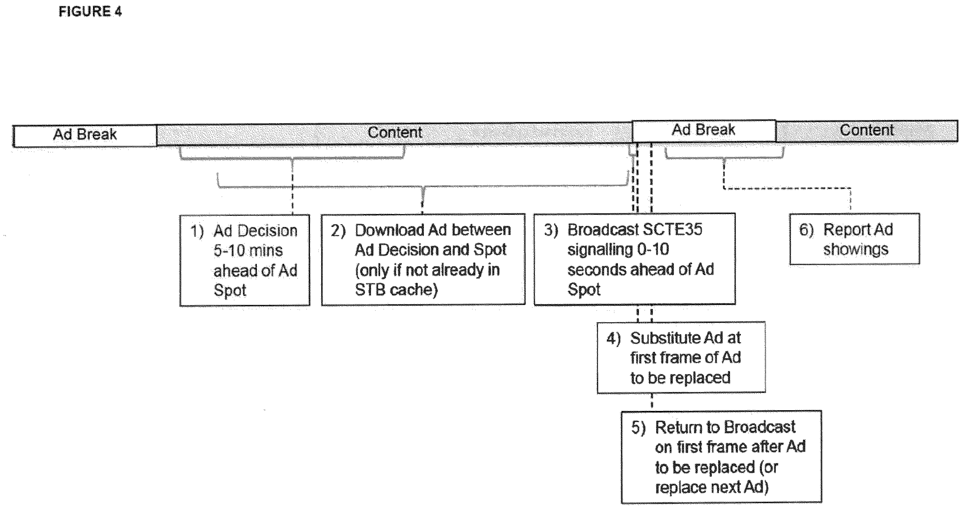

The sequence of operation of the system of Figure 3 and its differences to the sequence of operation of Figure 1 illustrated in Figure 2 can be understood with reference to Figure 4.

In Figure 4, an ad decision in the ad decisioning unit is made typically five to ten minutes ahead of an ad spot during the transmission of programme content to a user. The exact timing is not critical. All that needs to be facilitated is sufficient time for selected ads to be sent to the various client devices in the system. Obviously, many client devices may require different ads to be shown via DAI. The ad decisions unit (20) provides information on ads to be downloaded to client devices and the downloads with respective metadata are provided by the CDN (11) and ad ingest unit (18).

Once a decision on an ad selected for a particular client device in an ad decision window has been made, there is then plenty of time for each client device to download the respective ad in an ad download window and store it ready for subsequent playback.

Content is selected for a client device and can be pushed to the client device using, for example, a messaging system, in conjunction with a CDN (11). Other systems for pushing the content may be used.

If a messaging system is used, a short message is sent over a permanent connection to a client device, eg an internet connection. The message is sent by the ad decisions unit (20), and this unit has the permanent connection to the client device. The short message contains the ad decision information, including the identity of the content to be downloaded (eg the URL for the location on the CDN). The ad decisions unit (20) manages the timing of the ad decisions and so the short message is only sent when the client device is required to proceed with obtaining the content. Therefore the client device does not need to open a connection by making a request at an appropriate time. The connection is already there, and so the ad decisions unit (20) obtains ad decisions from the ad decisioning unit (12), and creates a message that is sent on the permanent connection to the client device. When the device receives the message, it performs the usual checks to see if it already has the content locally, and if not, it retrieves the content from the CDN in the same manner as before. Retrieval from the CDN uses a separate temporary connection.

As in Figure 2, the signalling of an upcoming ad spot takes place 0 to 10 seconds ahead of that ad break. Each client device is therefore notified that an ad break is approaching and has the precise timing of that break available.

At the start of the ad break, if an ad is to be inserted via DAI, it is retrieved from local storage and shown at the start of the ad break, commencing at the first frame of the ad break. Once that DAI ad has completed, the client device will revert to received scheduled content or ads from the content provider. A report on ad showings is then sent back to the content provider and to any external advert tracking services via the impressions and tracking unit. The system is configured to be able to replace any ad scheduled in an ad break. It is described here replacing the first ad in the ad break, but the timing signalling can be modified to enable any ad in the ad break to be replaced.

The applicants have appreciated that by moving the downloading of a DAI ad to a user to an earlier time within the scheduled content, the bandwidth problems which arise with the prior art systems can be avoided. DAI ads are downloaded over broadband well ahead of ad break and are played out from client device storage. This can be mechanical storage such as hard disc storage, or solid state storage, which can include flash memory storage or RAM storage

Using such a system enables only ads which are likely to be shown by the device to be downloaded. Thus the system may be modified to anticipate ads which a user may be shown in the future if certain viewing trends continue. Ads maybe downloaded only once and kept for further showings, or may be repeatedly downloaded if a less complex system is desired.

The content provider remains in direct control of ad decisions and these continue to be made just ahead of each advert break.

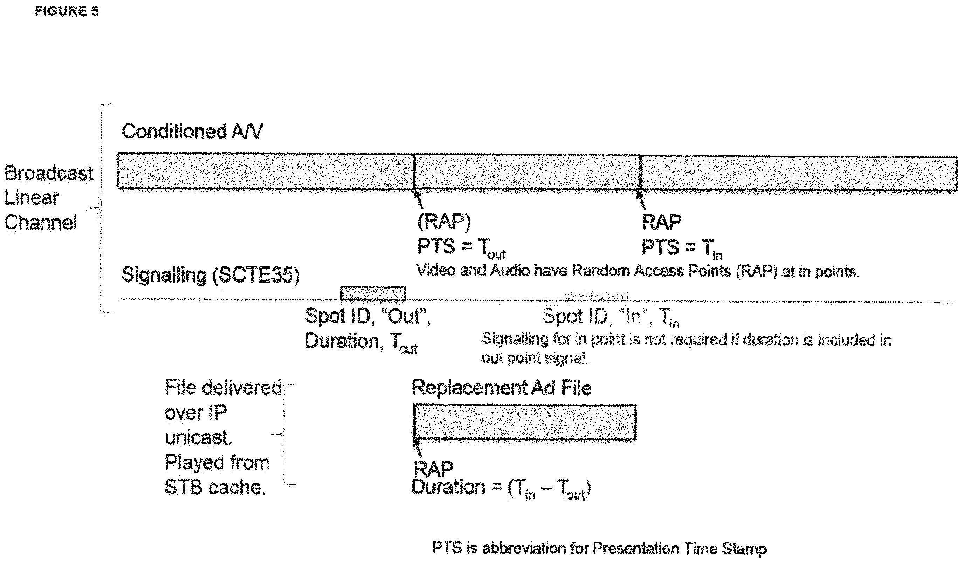

Figure 5 shows in more detail the timing of Figure 4. In this, a conditioned AV signal is sent in a linear channel transport stream. This includes signalling for an ad spot for a DAI ad. This is sent on an SCTE 35 signalling channel in parallel with the conditioned AV. The SCTE 35 signalling is another stream that is multiplexed with the audio and video streams and sent over the same broadcast channel.

The SCTE 35 signalling is shown commencing about ten seconds before an ad spot. A replacement ad file is then inserted in to the conditioned AV stream commencing at Tout and ending at Tin.

The positioning of an ad decision between ad breaks in an ad decision window is preferably selected such that consumption of targeted ads in a previous break can be reported on to the content provider prior to a decision being made for the next ad break. The specific timing for an individual client for an ad decision is preferably determined by the ad decisions unit (20) based on the nominal ad schedule. This also creates a deliberate spread of ad decision requests over a period of time of a few minutes. This spread of time for the ad decisions is significantly larger than is possible if the ad decisions are only made after the ad is triggered in the video stream as in the prior art. A spot ID shown in Figure 5 is included in the ad decision to allow the client device to tie together the ad decision with the trigger signal and to ensure playback commences at the correct point.

In preferred embodiments of the invention, a client device will make its first request for an ad decision whenever it starts to consume a channel from a content provider. A first response may contain no decisions if the request is at an unsuitable time relative to the ad break schedule. However, the response will contain a suitable time for the client to make its next request. The ad decisions unit (20) response to subsequent requests will contain both ad decision data and time for a subsequent request. By operating in this manner, the ad decisions unit (20) is managing the timing of all client ad requests such that they are spread within the ad decision window available which also helps to avoid bandwidth problems when downloading content during a subsequent ad download window.

A client device for use in embodiments of the invention is configured to receive and store ads for playback in ad breaks in place of scheduled ad content. The triggering of display of the downloaded ads then occurs as in the previously described prior art system. Preferably a client device is modified to embody the invention by modifying software running on the device.

Those skilled in the art will appreciate that various modifications to the systems described are possible without falling outside of the scope of the present invention.

Embodiments of the invention can be described with reference to the following numbered clauses, with preferred features set out in the dependent clauses:
Clause 1. A method for selectively inserting or replacing media content in scheduled media content for each of a plurality of client devices comprising the steps of:
   selecting media content to be inserted in scheduled media content for a client device; downloading the selected media content to the respective client device;
   signalling to the plurality of client devices a playback time for the downloaded media content, after the step of downloading the selected media content; and
   playing the downloaded media content on the client devices at the playback time in place of scheduled media content at the playback time;
   wherein the step of selecting media content is performed by one or more content selection servers connected to a plurality of client devices; and
   wherein the step of selecting media content comprises each client device requesting the media content selection at a time provided in a previous response from the content selection server.
Clause 2. A method according to clause 1 in which the timing for a media content selection request is determined from an approximate schedule of scheduled media content.
Clause 3. A method according to clause 1 or 2 in which there is a permanent connection to a client device from the content selection server and the step of downloading media content to a client device is performed by sending an instruction to the client device to download content or by sending the content over the permanent connection.
Clause 4. A system for selectively inserting or replacing media content in scheduled media content for each of a plurality of client devices comprising means for selecting media content for inserting or replacing media content for a client device, means for downloading the selected media content to the respective client device means for signalling to the client device a playback time for the selected media content after it has been downloaded, and means for playing the selected media content on the client device at the playback time; wherein the means for selecting media content comprises one or more content servers connected to the plurality of client devices,
   wherein each client device is configured to request media content selection at a time provided in a previous response from the content selection server.
Clause 5. A system according to clause 4 in which the means for signalling to the client device the timing for a playback time is configured to determine this from an approximate schedule of media content.
Clause 6. A system according to any of clauses 4 or 5 in which there is a permanent connection from the content selection server to a client device and the content selection server is configured to send an instruction to the client device to download specific media content, or sends the selected media content over the permanent connection.
Clause 7. A client device configured to operate in the method of any of clauses 1 to 3.
Clause 8. A content selection server configured to operate in the method of any of clauses 1 to 3.
Clause 9. A method for selectively inserting or replacing media content in scheduled media content for each of a plurality of client devices comprising the steps of:
   selecting media content to be inserted in scheduled media content for a client device; downloading the selected media content to the respective client device;
   signalling to the plurality of client devices a playback time for the downloaded media content, after the step of downloading the selected media content; and
   playing the downloaded media content on the client devices at the playback time in place of scheduled media content at the playback time;
   wherein the step of selecting media content is performed by one or more content selection servers connected to a plurality of client devices; and
   wherein which the timing for a media content selection request is determined from an approximate schedule of scheduled media content.
Clause 10. A method according to clause 9 in which there is a permanent connection to a client device from the content selection server and the step of downloading media content to a client device is performed by sending an instruction to the client device to download content or by sending the content over the permanent connection.
Clause 11. A system for selectively inserting or replacing media content in scheduled media content for each of a plurality of client devices comprising means for selecting media content for inserting or replacing media content for a client device, means for downloading the selected media content to the respective client device means for signalling to the client device a playback time for the selected media content after it has been downloaded, and means for playing the selected media content on the client device at the playback time; wherein the means for selecting media content comprises one or more content serves connected to the plurality of client devices; and
   wherein the means for signalling to the client device the timing for a playback time is configured to determine this from an approximate schedule of media content.
Clause 12. A system according to clause 11 in which there is a permanent connection from the content selection server to a client device and the content selection server is configured to send an instruction to the client device to download specific media content, or sends the selected media content over the permanent connection.
Clause 13. A client device configured to operate in the method of any of clauses 9 or 10.
Clause 14. A content selection server configured to operate in the method of any of clauses 9 or 10.

## Claims

1. A method for selectively inserting or replacing media content in scheduled media content for each of a plurality of client devices comprising the steps of:
selecting media content to be inserted in scheduled media content for a client device;
downloading the selected media content to the respective client device;
signalling to the plurality of client devices a playback time for the downloaded media content, after the step of downloading the selected media content; and
playing the downloaded media content on the client devices at the playback time in place of scheduled media content at the playback time;
wherein the step of selecting media content is performed by one or more content selection servers connected to a plurality of client devices; and
wherein the timing for a media content selection request is determined from an approximate schedule of scheduled media content.

2. A method according to claim 1 in which there is a permanent connection to a client device from the content selection server and the step of downloading media content to a client device is performed by sending an instruction to the client device to download content or by sending the content over the permanent connection.

3. A system for selectively inserting or replacing media content in scheduled media content for each of a plurality of client devices comprising means for selecting media content for inserting or replacing media content for a client device, means for downloading the selected media content to the respective client device means for signalling to the client device a playback time for the selected media content after it has been downloaded, and means for playing the selected media content on the client device at the playback time;
wherein the means for selecting media content comprises one or more content servers connected to the plurality of client devices; and
wherein the means for signalling to the client device the timing for a playback time is configured to determine the timing for a playback time from an approximate schedule of media content.

4. A system according to claim 3 in which there is a permanent connection from the content selection server to a client device and the content selection server is configured to send an instruction to the client device to download specific media content, or sends the selected media content over the permanent connection.

5. A client device configured to operate in the method of any of claims 1 or 2.

6. A content selection server configured to operate in the method of any of claims 1 or 2.
